# EUROPÄISCHE PATENTSCHRIFT

(11) **EP 3 195 721 B1**
(45) Veröffentlichungstag und Bekanntmachung des Hinweises auf die Patenterteilung: **11.06.2025**
(21) Anmeldenummer: 17000110.1
(22) Anmeldetag: 23.01.2017
(51) Int. Cl.: A01G 3/033, B27B 17/12, A01G 3/08

(54) **HANDGEFÜHRTES ARBEITSGERÄT MIT EINER FÜHRUNGSSCHIENE**
MANUALLY OPERATED WORKING DEVICE HAVING A GUIDE RAIL
APPAREIL DE TRAVAIL MANUEL COMPRENANT UN RAIL DE GUIDAGE

(30) Priorität: 23.01.2016 DE 102016000718
(43) Veröffentlichungstag der Anmeldung: 26.07.2017
(73) Patentinhaber: Andreas Stihl AG & Co. KG, 71336 Waiblingen (DE)
(72) Erfinder: Föhrenbach, Jan, D-70734 Fellbach (DE); Uhl, Klaus-Martin, D-73207 Plochingen (DE)
(74) Vertreter: Reinhardt, Annette

(56) Entgegenhaltungen:
- DE-A1- 19 547 353
- US-A- 4 819 332
- US-A- 5 653 028

## Beschreibung

Die Erfindung betrifft ein handgeführtes Arbeitsgerät mit einer Führungsschiene der im Oberbegriff des Anspruchs 1 angegebenen Gattung.

Aus der DE 196 19 081 A1 ist ein handgeführtes Arbeitsgerät, nämlich ein Hochentaster bekannt. Der Hochentaster besitzt einen Schneidkopf, an dem eine Führungsschiene festzulegen ist. Zur Schmierung der an der Führungsschiene umlaufenden Sägekette ist eine Ölpumpe vorgesehen, die Öl aus einem Öltank durch einen Ölkanal bis zu einer Ölnut in einem Befestigungsflansch führt. An dem Befestigungsflansch liegt im Betrieb eine Führungsschiene an. Bezogen auf die übliche Arbeitsposition des Arbeitsgeräts ist der Befestigungsflansch an der rechten Seite des Schneidkopfs angeordnet. Dadurch ist der Blick auf die Schnittstelle im Betrieb durch den Schneidkopf behindert.

Die an dem Befestigungsflansch anliegende Außenseite der Führungsschiene besitzt üblicherweise eine Ölzuführöffnung, die der Ölnut des Befestigungsflansches gegenüberliegt und sich von der Außenseite in die Führungsnut erstreckt. Durch die Ölzuführöffnung wird Öl in die Führungsnut der Führungsschiene zugeführt. Damit die Führungsschiene wendbar ist, sind üblicherweise auf beiden Außenseiten der Führungsschiene Ölzuführöffnungen angeordnet. Die Ölzufuhr erfolgt ausschließlich über die Ölzuführöffnung, die an der dem Befestigungsflansch zugewandten Seite angeordnet ist. Die ölzuführende Ölzuführöffnung liegt dabei üblicherweise oberhalb einer Längsmittelachse der Führungsschiene, so dass Öl mit der Sägekette in Richtung Spitze der Führungsschiene transportiert wird.

Um die Sicht auf die Führungsschiene im Betrieb zu verbessern, ist es wünschenswert, dass der Befestigungsflansch für die Führungsschiene an der im üblichen Betrieb linken Seite des Schneidkopfs angeordnet ist, so dass der Schneidkopf den Blick auf die Führungsschiene bei üblicher Arbeitsposition nur wenig verdeckt.

Bei üblichen Motorsägen ist die Schienenanschlagfläche auf der rechten Seite der Motorsäge angeordnet. Die Führungsschiene besitzt an der Außenseite, mit der sie am Gehäuse der Motorsäge anliegt, eine Ölzuführöffnung zur Zufuhr von Öl in die Führungsnut. Es ist wünschenswert, dass auch für Arbeitsgeräte, bei denen die Schienenanschlagfläche auf der gegenüberliegenden, linken Seite angeordnet ist, die Führungsschienen üblicher Motorsägen verwendet werden können und die Ölzufuhr über dieselbe Ölzuführöffnung erfolgen kann.

Aus der DE 195 47 353 A1 ist ein gattungsgemäßes Arbeitsgerät bekannt. Die Führungsschiene besitzt einen Ölzuführkanal, der von einem Querkanal gespeist ist. Der Querkanal kann sich von der einen zur anderen Außenseite der Führungsschiene erstrecken. Querkanal und Ölzuführkanal sind in einem Einsatzteil der Führungsschiene ausgebildet, das im Grundkörper der Führungsschiene fixiert ist.

Der Erfindung liegt die Aufgabe zugrunde, ein handgeführtes Arbeitsgerät der gattungsgemäßen Art zu schaffen, an dem Führungsschienen montiert werden können, bei denen eine Ölzuführöffnung auf der dem Gehäuse des Arbeitsgeräts abgewandten Seite angeordnet ist.

Diese Aufgabe wird durch ein Arbeitsgerät mit den Merkmalen des Anspruchs 1 gelöst.

Es ist vorgesehen, dass der Ölzuführkanal, der die Ölzuführöffnung in der Führungsschiene mit einer Ölzuführvorrichtung verbindet, einen von der Führungsschiene getrennt ausgebildeten Kanalabschnitt umfasst, der sich zumindest von einer ersten Ebene, die die dem Gehäuse zugewandte Außenseite der Führungsschiene umfasst, bis zu einer zweiten Ebene, die die dem Kettenraddeckel zugewandte Außenseite der Führungsschiene umfasst, erstreckt. Der Kanalabschnitt erstreckt sich demnach mindestens über die Breite der Führungsschiene zwischen dem Gehäuse und dem Kettenraddeckel. Dadurch, dass der Kanalabschnitt getrennt von der Führungsschiene ausgebildet ist, kann der Kanalabschnitt ortsfest gegenüber dem Gehäuse angeordnet werden. Dadurch bewegt sich der Kanalabschnitt nicht, wenn die Sägekette gespannt und hierzu die Führungsschiene gegenüber dem Gehäuse und gegenüber dem Kettenraddeckel bewegt wird. Dadurch wird die Abdichtung des Kanalabschnitts vereinfacht. Der Kanalabschnitt ist von einer Relativbewegung der Führungsschiene gegenüber dem Gehäuse entkoppelt. Über den Kanalabschnitt kann auf einfache Weise Öl vom Gehäuse zu der dem Kettenraddeckel zugewandten Seite der Führungsschiene und von dort über die Ölzuführöffnung in die Führungsnut der Führungsschiene zugeführt werden. Dadurch ist auf einfache Weise eine Schmierung der Sägekette möglich. Dabei können Führungsschienen zum Einsatz kommen, bei denen die Ölzuführöffnung auf der dem Gehäuse abgewandten Seite angeordnet ist. Trotz geänderter Position des Befestigungsflanschs erfolgt die Ölzufuhr über die Ölzuführöffnung der Führungsschiene, über die auch bei herkömmlicher Position des Befestigungsflanschs die Ölzufuhr erfolgen würde.

Eine bevorzugte Anordnung des Kanalabschnitts ergibt sich, wenn die Längsmittelachse der Führungsschiene den Kanalabschnitt schneidet. Der Kanalabschnitt ist demnach im Bereich der Längsmittelachse der Führungsschiene angeordnet. Besonders bevorzugt erstreckt sich der Kanalabschnitt durch einen Führungsschlitz der Führungsschiene. Dadurch wird eine kompakte Anordnung bei kurzen Wegen für das Öl erreicht, so dass sich eine zuverlässige Schmierung ergibt.

Eine einfache Gestaltung wird erreicht, wenn der Kanalabschnitt mindestens teilweise in einem Fortsatz ausgebildet ist, der in eine Aufnahme ragt. Der Ölzuführkanal verläuft dabei durch die Aufnahme. Beim Abnehmen des Kettenraddeckels von dem Gehäuse wird der Fortsatz vorteilhaft aus der Aufnahme gezogen. Dadurch kann der Kettenraddeckel auf einfache Weise von dem Gehäuse abgenommen werden, wobei der Ölzuführkanal zwischen der Ölzuführvorrichtung und der Ölzuführöffnung der Führungsschiene getrennt wird. Durch Einstecken eines Fortsatzes in eine Aufnahme kann auf einfache Weise eine trennbare Verbindung im Ölzuführkanal erreicht werden. Der Fortsatz und die Aufnahme sind vorteilhaft an einer Dichtung zueinander abgedichtet. Die Dichtung kann dabei an einem separaten, zwischen Fortsatz und Aufnahme angeordneten Dichtelement ausgebildet sein. Besonders bevorzugt ist die Dichtung als Dichtfläche ausgebildet, die unmittelbar zwischen dem Fortsatz und der Aufnahme gebildet ist und an der Aufnahme und Fortsatz aneinander anliegen. Bevorzugt ist die Dichtung am Umfang des Fortsatzes angeordnet. Die Dichtung ist damit eine in radialer Richtung wirkende Dichtung. Dadurch kann eine sichere Abdichtung, insbesondere über eine vergleichsweise große Dichtfläche, erreicht werden. Die Dichtwirkung ist aufgrund der Abdichtung am Umfang weitgehend unabhängig von der Relativposition von Fortsatz und Aufnahme zueinander, die beispielsweise bei unterschiedlich dicken Führungsschienen unterschiedlich ist.

Eine einfache und sichere Abdichtung kann erreicht werden, wenn die Dichtung relativ zum Gehäuse beim Verschieben der Führungsschiene gegenüber dem Gehäuse ortsfest angeordnet ist. Die Dichtung verschiebt sich demnach beim Verschieben der Führungsschiene, also beim Spannen der Sägekette, nicht gegenüber dem Gehäuse. Dadurch, dass Fortsatz und Aufnahme beim Abnehmen des Kettenraddeckels voneinander abgezogen werden, bewegt sich lediglich beim Aufsetzen oder Abnehmen des Kettenraddeckels ein Dichtpartner der Dichtung.

Um ein einfaches Aufsetzen und Abnehmen des Kettenraddeckels zu ermöglichen, ist vorteilhaft vorgesehen, dass die Dichtung zwischen der zweiten Ebene und einer dem Gehäuse abgewandten Außenseite des Kettenraddeckels angeordnet ist. Ein Dichtpartner oder ein eine separate Dichtung tragendes Element ragt demnach bei am Gehäuse aufgelegter Führungsschiene durch den Bereich zwischen der ersten und der zweiten Ebene auf die dem Gehäuse abgewandte Seite der Führungsschiene.

Es kann vorgesehen sein, dass die Aufnahme am Gehäuse angeordnet ist und der Fortsatz am Kettenraddeckel. Der Fortsatz kann dabei auch bei einer Anordnung am Kettenraddeckel bis zur ersten Ebene am Gehäuse oder bis in das Gehäuse hineinragen. Es kann jedoch auch vorteilhaft sein, dass die Aufnahme mindestens bis zur zweiten Ebene ragt.

Auch eine Anordnung, bei der sowohl die Aufnahme als auch der Fortsatz in den Bereich zwischen den beiden Ebenen ragen, kann vorteilhaft sein. Alternativ kann auch vorgesehen sein, dass die Aufnahme am Kettenraddeckel und der Fortsatz am Gehäuse angeordnet sind. Dabei kann der Fortsatz bis zur zweiten Ebene am Kettenraddeckel oder bis in den Kettenraddeckel ragen. Auch bei der Anordnung der Aufnahme am Kettenraddeckel können sowohl Aufnahme als auch Fortsatz in den Bereich zwischen den beiden Ebenen ragen.

Vorteilhaft ist die Aufnahme eine Hülse. Die Hülse ist insbesondere eine metallische Hülse. Auch eine Hülse aus Kunststoff kann jedoch vorteilhaft sein. Der Fortsatz ist vorteilhaft durch ein Führungselement gebildet. Der Kanalabschnitt ist bevorzugt als Durchgangsöffnung in dem Führungselement ausgebildet. Das Führungselement ist dabei insbesondere ein Führungsbolzen. Bevorzugt ist dabei der Fortsatz am Gehäuse festgelegt und die Hülse am Kettenraddeckel. Dies ermöglicht, als Fortsatz ein Führungselement zu nutzen.

Eine einfache Ölzufuhr in die dem Gehäuse abgewandte Seite der Führungsschiene ergibt sich, wenn im Kettenraddeckel ein Ölzuführschlitz ausgebildet ist, der gegenüberliegend zur Ölzuführöffnung der Führungsschiene angeordnet ist. Der Ölzuführschlitz erstreckt sich dabei vorteilhaft über eine Länge, die mindestens dem üblichen Verstellweg einer Führungsschiene gegenüber dem Gehäuse entspricht. Dadurch kann in jeder Lage der Führungsschiene eine Ölzufuhr aus dem Ölzuführschlitz in die Ölzuführöffnung der Führungsschiene sichergestellt werden. Dadurch, dass der Kanalabschnitt getrennt von der Führungsschiene ausgebildet und vorteilhaft nicht mit der Führungsschiene bewegt wird, ist der Ölzuführschlitz bevorzugt die einzige Stelle des Ölzuführkanals, deren dichtende Flächen bei einer Verstellung der Position der Führungsschiene gegenüber dem Gehäuse eine Relativbewegung zueinander ausführen. Es kann vorteilhaft sein, den Ölzuführkanal über alle weiteren Bereiche über ihren gesamten Umfang vollständig zu schließen, so dass sich ein geschlossener Kanal ergibt. Ein einfacher Aufbau wird jedoch erreicht, wenn der Kanalabschnitt mit dem Ölzuführschlitz über einen zur Schienenanlagefläche des Kettenraddeckels offenen Verbindungskanal verbunden ist. Ein solcher Verbindungskanal kann insbesondere bei der Herstellung des Kettenraddeckels in einem Spritzgussverfahren einfach in Form einer Nut am Kettenraddeckel integriert werden. Der Verbindungskanal wird über die dem Kettenraddeckel zugewandte Außenseite der Führungsschiene abgedichtet.

Das Arbeitsgerät besitzt vorteilhaft eine Spannvorrichtung. Die Spannvorrichtung dient dabei insbesondere zum Spannen der Sägekette. Die Führungsschiene besitzt eine Querebene, die die Längsmittelachse der Führungsschiene enthält und die senkrecht zur Ebene der Führungsschiene steht. Der Ölzuführschlitz und die Spannvorrichtung sind bevorzugt auf gegenüberliegenden Seiten der Querebene angeordnet. Dadurch ergibt sich ein kompakter Aufbau. Bevorzugt ist der Ölzuführschlitz im Bereich des oberen, zum freien Ende der Führungsschiene laufenden Trums der Sägekette angeordnet, und die Spannvorrichtung ist im Bereich des unteren, vom freien Ende der Führungsschiene zu einem Antriebsritzel laufenden Trums der Sägekette angeordnet. Auch die Ölzuführöffnung, an der der Ölzuführkanal endet, ist vorteilhaft im Bereich des oberen Trums der Sägekette angeordnet.

Vorteilhaft sind mindestens zwei Führungselemente für die Führungsschiene vorgesehen. Ein zweites Führungselement ist vorteilhaft als Führungsbolzen ausgebildet und besitzt ein Außengewinde zum Aufschrauben einer Befestigungsmutter zur Fixierung des Kettenraddeckels. Das zweite Führungselement besitzt dabei vorteilhaft eine größere Länge als das erste Führungselement, das den Fortsatz bildet. Die Länge der Führungselemente ist dabei senkrecht zur ersten Ebene und bis zur ersten Ebene gemessen. Das Arbeitsgerät ist vorteilhaft ein Hochentaster und das Gehäuse ein Getriebegehäuse. Das Arbeitsgerät ist bevorzugt ein Arbeitsgerät, bei dem die Auflagefläche des Gehäuses, an der die Führungsschiene anliegt, in üblicher Betriebsposition, in der die Sägekette am oberen Trum zum freien Ende und am unteren Trum zum Antriebsritzel läuft, in Blickrichtung vom Gehäuse zum freien Ende auf der linken Seite des Gehäuses angeordnet ist.

Bevorzugt sind das Gehäuse und der Fortsatz getrennt voneinander ausgebildete Bauteile, die miteinander fest verbunden sind. Gehäuse und Fortsatz können dabei vorteilhaft aus unterschiedlichen Werkstoffen bestehen. Der Fortsatz ist insbesondere austauschbar. Die getrennte Ausbildung von Gehäuse und Fortsatz ist insbesondere vorteilhaft, wenn der Fortsatz ein Führungselement für die Führungsschiene bildet. In alternativer Gestaltung kann es jedoch auch vorteilhaft sein, den Fortsatz einteilig mit dem Gehäuse oder dem Kettenraddeckel auszubilden. Insbesondere die einteilige Ausbildung als Spritzgussbauteil ist vorteilhaft.

Ausführungsbeispiele der Erfindung werden im Folgenden anhand der Zeichnung erläutert. Es zeigen:
- Fig. 1: eine teilweise schematische, perspektivische Darstellung eines Hochentasters,
- Fig. 2: eine Draufsicht auf einen Schneidkopf des Hochentasters,
- Fig. 3: eine Seitenansicht in Richtung des Pfeils III in Fig. 2,
- Fig. 4: eine teilgeschnittene Seitenansicht in Richtung des Pfeils IV in Fig. 3,
- Fig. 5: eine teilgeschnittene Seitenansicht in Richtung des Pfeils V in Fig. 4,
- Fig. 6: einen Schnitt durch den Schneidkopf entlang der Linie VI-VI in Fig. 5,
- Fig. 7: eine Seitenansicht des Gehäuses des Schneidkopfs mit daran angeordneter Führungsschiene,
- Fig. 8: eine Seitenansicht des Kettenraddeckels von der dem Gehäuse zugewandten Seite,
- Fig. 9: einen Schnitt entlang der Linie IX-IX in Fig. 8,
- Fig. 10: einen Schnitt entlang der Linie X-X in Fig. 8,
- Fig. 11: eine im Bereich der Führungsschiene teilgeschnittene Ansicht des Schneidkopfs,
- Fig. 12: eine Seitenansicht des Gehäuses des Schneidkopfs,
- Fig. 13: eine Seitenansicht in Richtung des Pfeils XIII in Fig. 12,
- Fig. 14: eine teilgeschnittene Seitenansicht in Richtung des Pfeils XIV in Fig. 13,
- Fig. 15: eine teilgeschnittene Seitenansicht in Richtung des Pfeils XV in Fig. 14,
- Fig. 16 und 17: schematische ausschnittsweise Schnittdarstellungen von Ausführungsbeispielen des Kanalabschnitts,
- Fig. 18: eine schematische teilgeschnittene Darstellung eines Ausführungsbeispiels eines Kettenraddeckels,
- Fig. 19: eine schematische Schnittdarstellung des Kettenraddeckels aus Fig. 18,
- Fig. 20: eine schematische Seitenansicht eines Ausführungsbeispiels eines Getriebegehäuses für den in den Figuren 18 und 19 gezeigten Kettenraddeckel,
- Fig. 21: eine schematische teilgeschnittene Seitenansicht in Richtung des Pfeils XXI in Fig. 20.

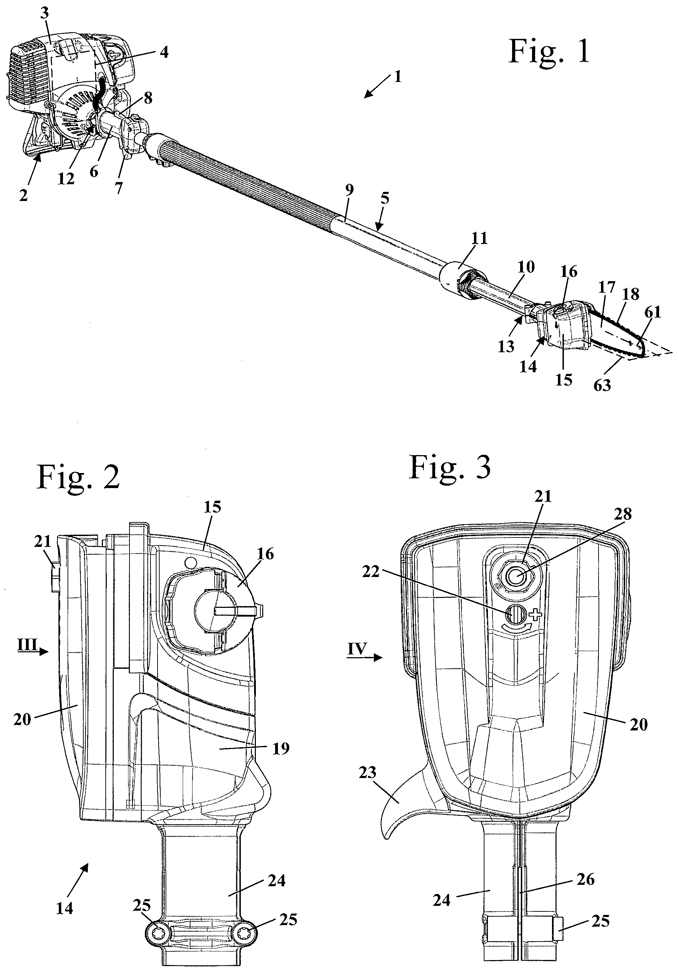

Fig. 1 zeigt als Ausführungsbeispiel für ein handgeführtes Arbeitsgerät einen Hochentaster 1. Das handgeführte Arbeitsgerät kann jedoch auch ein anderes handgeführtes Arbeitsgerät mit einer Führungsschiene, beispielsweise eine Motorsäge sein. Der Hochentaster 1 besitzt eine Antriebseinheit 2, die über ein Führungsrohr 5 mit einem Schneidkopf 14 verbunden ist. Die Antriebseinheit 2 besitzt ein Gehäuse 3, in dem ein in Fig. 1 schematisch dargestellter Antriebsmotor 4 angeordnet ist. Der Antriebsmotor 4 ist vorteilhaft ein Verbrennungsmotor. Der Antriebsmotor 4 kann jedoch auch ein Elektromotor sein. Es kann auch vorgesehen sein, dass der Antriebsmotor am Schneidkopf 14 angeordnet ist, insbesondere, wenn der Antriebsmotor 4 ein Elektromotor ist. Im Gehäuse 3 der Antriebseinheit 2 kann dann beispielsweise ein Akku zur Versorgung des Antriebsmotors 4 mit Energie angeordnet sein.

Das Führungsrohr 5 besitzt ein erstes Ende 12, an dem die Antriebseinheit 2 festgelegt ist. Benachbart zum ersten Ende 12 ist ein Handgriff 6 am Führungsrohr 5 festgelegt, an dem ein Gashebel 7 sowie eine Gashebelsperre 8 gelagert sind. Auch weitere oder andere Bedienelemente können vorteilhaft sein.

Das Führungsrohr 5 ist im Ausführungsbeispiel als Teleskoprohr ausgebildet und besitzt einen ersten, äußeren Abschnitt 9, in den ein zweiter innerer Abschnitt 10 ragt. Die beiden Abschnitte 9 und 10 sind über eine Fixiereinrichtung 11 miteinander verbunden. Das Führungsrohr 5 kann jedoch auch als Rohr ausgebildet sein, dessen Länge nicht verstellbar ist. Durch das Führungsrohr 5 ragt vorteilhaft eine Antriebswelle. Das Führungsrohr 5 besitzt ein zweites Ende 13, das am zweiten, inneren Abschnitt 10 des Führungsrohrs 5 ausgebildet ist und an dem der Schneidkopf 14 fixiert ist.

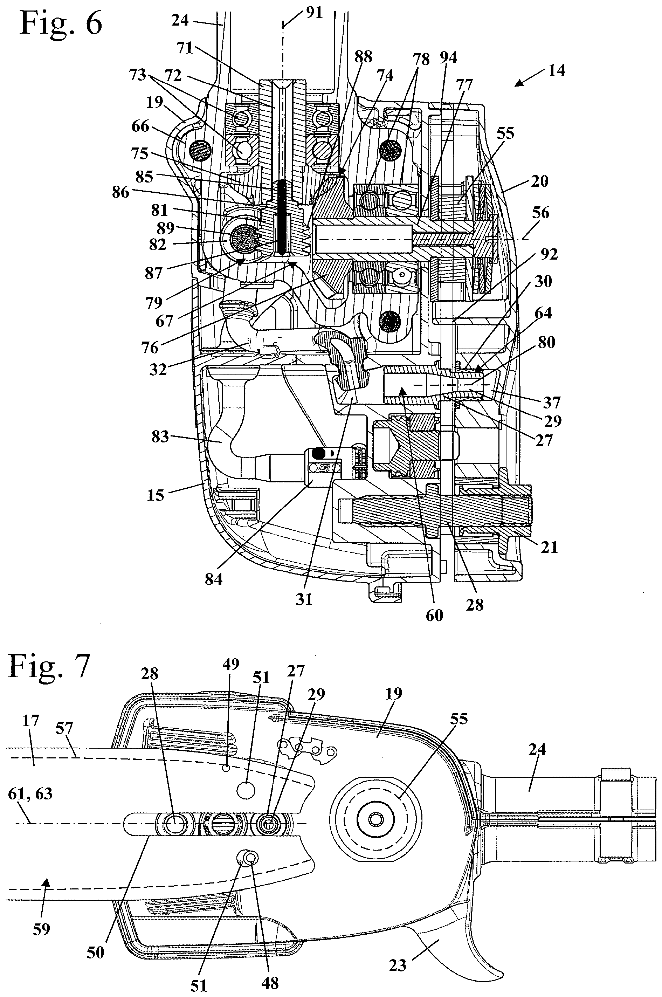

Der Schneidkopf 14 besitzt einen Öltank 15, der mit einem Öltankverschluss 16 zu öffnen und zu verschließen ist. Am Schneidkopf 14 ist eine Führungsschiene 17 angeordnet, an der eine Sägekette 18 geführt ist. Die Sägekette 18 ist an der Führungsschiene 17 vom Antriebsmotor 4 umlaufend angetrieben. Die Führungsschiene 17 besitzt eine Längsmittelachse 61 sowie eine Querebene 63. Die Querebene 63 steht senkrecht zur Ebene der Führungsschiene 17 und enthält die Längsmittelachse 61. Die Sägekette 18 schneidet die Querebene 63 demnach nur am freien Ende der Führungsschiene 17 sowie beim Passieren eines Kettenrads 55 (Fig. 6) und liegt nicht über ihre gesamte Länge in der Querebene 63.

In üblicher Arbeitsposition liegt das Arbeitsgerät rechtsseitig des Benutzers. Um im Betrieb den Blick auf die Schnittstelle durch das Getriebegehäuse nicht zu behindern, ist die Führungsschiene 17 vom Bediener aus gesehen an der linken Seite des Schneidkopfs 14 angeordnet.

Die Fig. 2 und 3 zeigen den Aufbau des Schneidkopfs 14. Wie Fig. 2 zeigt, besitzt der Schneidkopf 14 einen Befestigungsstutzen 24, mit dem der Schneidkopf 14 mittels Schrauben 25 auf dem Führungsrohr 5 festgeklemmt werden kann. Wie Fig. 3 zeigt, besitzt der Befestigungsstutzen 24 einen Längsschlitz 26, der eine elastische Verformung des Befestigungsstutzens 24 erlaubt.

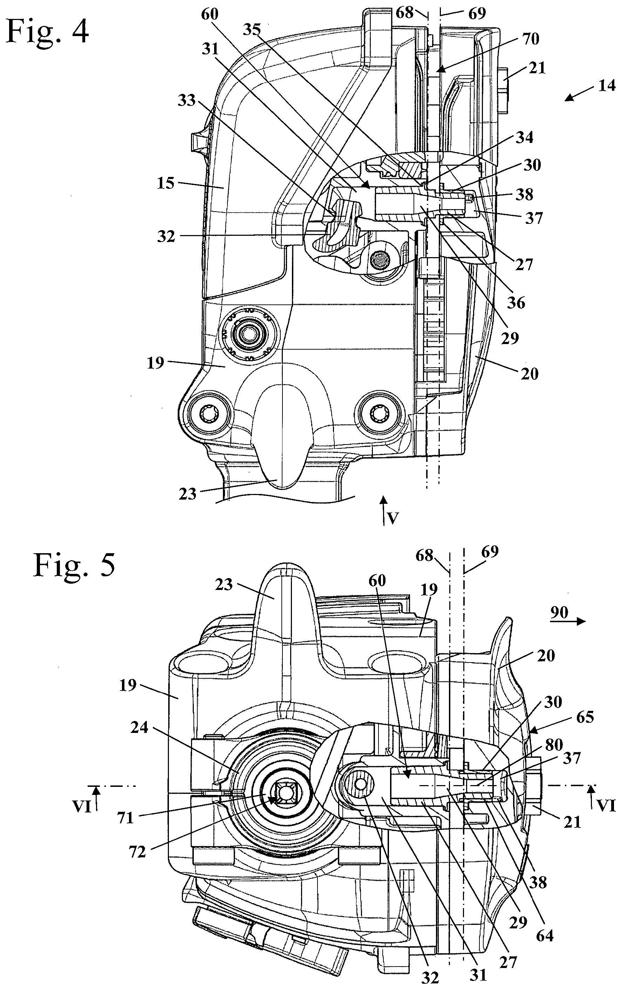

Wie Fig. 2 zeigt, besitzt der Schneidkopf 14 ein Getriebegehäuse 19, an dem der Öltank 15 angeordnet ist. Am Getriebegehäuse 19 ist ein Kettenraddeckel 20 über ein Befestigungselement, im Ausführungsbeispiel eine Befestigungsmutter 21, fixiert. Wie Fig. 3 zeigt, ist die Befestigungsmutter 21 auf einem Führungsbolzen 28 des Getriebegehäuses 19 festgeschraubt. Benachbart zur Befestigungsmutter 21 ist eine Öffnung im Kettenraddeckel vorgesehen, durch die eine Spannschraube 22 einer im Nachfolgenden noch näher beschriebenen Spannvorrichtung für die Sägekette 18 betätigt werden kann. Am Getriebegehäuse 19 ist außerdem ein Haken 23 ausgebildet, der ein Abrutschen des Schneidkopfes 14 im Betrieb verhindern kann. Der Haken 23 ist auch in Fig. 4 gezeigt.

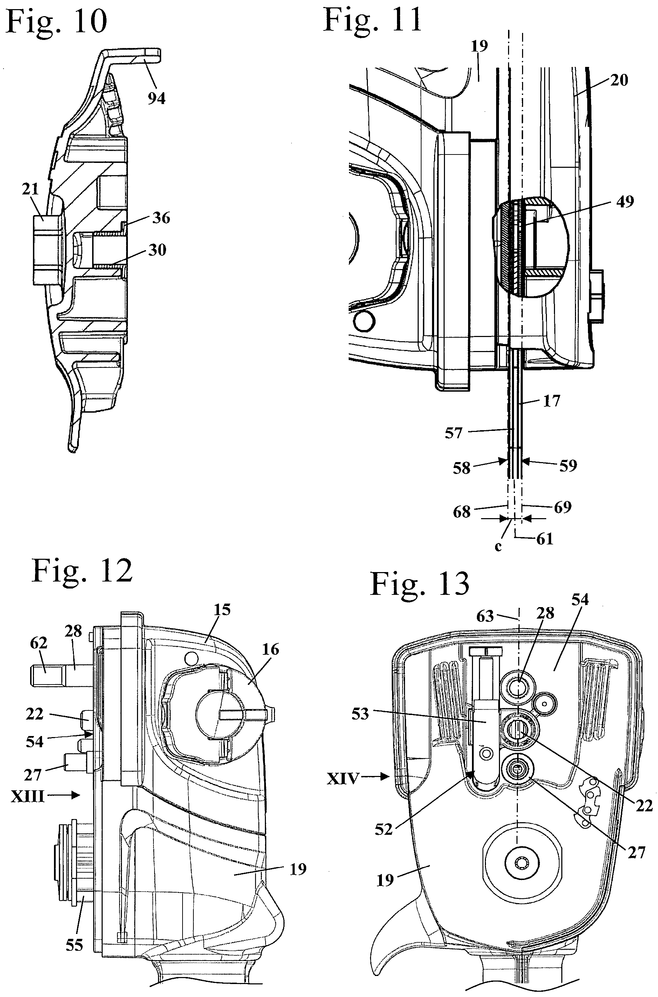

Im Betrieb muss zur Sägekette 18, und zwar zu dem vom Schneidkopf 14 zum freien Ende der Führungsschiene 17 laufenden Trum der Sägekette 18 (Fig. 1) Öl zugeführt werden. In üblicher Betriebsposition ist das vom Schneidkopf 14 zum freien Ende der Führungsschiene 17 laufende Trum das obere Trum der Sägekette 18. Zur Ölzufuhr ist im Getriebegehäuse 19 eine Ölzuführvorrichtung, im Ausführungsbeispiel eine in Fig. 6 gezeigte Ölpumpe 79, vorgesehen, die Öl aus dem Öltank 15 über einen Ölzuführkanal 60 zur Führungsschiene 17 (Fig. 1) zuführt. Die Führungsschiene 17 ist in Fig. 4 nicht gezeigt. In Fig. 4 ist jedoch schematisch eine erste Ebene 68 eingezeichnet, in der eine erste, dem Getriebegehäuse 19 zugewandte Außenseite 58 (Fig. 11) der Führungsschiene 17 liegt. Außerdem ist eine zweite Ebene 69 schematisch eingezeichnet. In der zweiten Ebene 69 liegt eine dem Kettenraddeckel 20 zugewandte, in Fig. 11 gezeigte zweite Außenseite 59 der Führungsschiene 17. Mittig zwischen den Außenseiten 58 und 59 verläuft eine Führungsnut 57, in der die Sägekette 18 (Fig. 1) geführt ist.

Fig. 4 zeigt einen Teil des Ölzuführkanals 60. Der Ölzuführkanal 60 bezeichnet dabei den gesamten Ölzuführkanal von der Ölpumpe 79 (Fig. 6) bis zu einer Ölzuführöffnung in der Führungsschiene 17. Ein Abschnitt des Ölzuführkanals 60 ist in einem Zuführschlauch 32 geführt. Der Zuführschlauch 32 besitzt an seinem Außenumfang eine Verengung, die im Ausführungsbeispiel in eine Öffnung 33 einer Wand des Getriebegehäuses 19 eingeknüpft ist. Der Zuführschlauch 32 mündet in einen Ölraum 31, der ebenfalls im Getriebegehäuse 19 ausgebildet ist. In den Ölraum 31 ist im Ausführungsbeispiel ein erster Führungsbolzen 27 eingepresst. Der Führungsbolzen 27 bildet einen vom Getriebegehäuse 19 vorstehenden Fortsatz. Der Führungsbolzen 27 kann dabei aus einem anderen Werkstoff bestehen als das Getriebegehäuse 19. Es kann vorteilhaft sein, dass der Führungsbolzen 27 austauschbar am Getriebegehäuse 19 gehalten ist. Der Führungsbolzen 28, auf den die Befestigungsmutter 21 aufgeschraubt ist (Fig. 3), bildet einen zweiten Führungsbolzen. Der erste Führungsbolzen 27 besitzt eine Durchgangsöffnung, die einen Kanalabschnitt 29 des Ölzuführkanals 60 bildet. Das freie, aus dem Getriebegehäuse 19 ragende Ende des ersten Führungsbolzens 27 ist in eine Hülse 30 eingesteckt, die im Kettenraddeckel 20 gehalten ist. Die Hülse 30 ist ebenfalls mit einer Durchgangsöffnung versehen. Der Kanalabschnitt 29 mündet in einen im Kettenraddeckel 20 ausgebildeten Ölraum 37, aus dem ein Verbindungskanal 38 führt. Der Verbindungskanal 38 wird im Folgenden noch näher beschrieben. Auch der Ölraum 37 und der Verbindungskanal 38 bilden Abschnitte des Ölzuführkanals 60. Der Führungsbolzen 27 bildet einen Fortsatz, und die Hülse 30 bildet eine Aufnahme.

Wie Fig. 4 zeigt, besitzt der Führungsbolzen 27 einen nach außen ragenden Bund 34, der an einem am Getriebegehäuse 19 ausgebildeten Anschlag 35 anliegt. Dadurch ist die Einschubtiefe des Führungsbolzens 27 konstruktiv vorgegeben. Die Hülse 30 besitzt benachbart zur zweiten Ebene 69, also an ihrer der Führungsschiene 17 zugewandten Seite, einen nach außen ragenden Bund 36, der die Einschubtiefe der Hülse 30 in den Kettenraddeckel 20 begrenzt und sicherstellt, dass die Hülse 30 den am Umfang des Ölraums 37 beginnenden Verbindungskanal 38 nicht verschließen kann. Wie Fig. 4 auch zeigt, ist zwischen den Ebenen 68 und 69 ein Spalt 70 gebildet, durch den die Führungsschiene 17 aus dem Schneidkopf 14 ragen kann. Der Spalt 70 erstreckt sich nur über einen Teil des Umfangs des Schneidkopfes 14.

Wie in Fig. 5 gezeigt ist, ist zwischen der Hülse 30 und dem ersten Führungsbolzen 27 eine Dichtung 64 gebildet. Die Dichtung 64 erstreckt sich in Längsrichtung und in Umfangsrichtung einer Längsachse 80 des Kanalabschnitts 29. Im Ausführungsbeispiel ist die Dichtung 64 an einer Dichtfläche ausgebildet, an der die Hülse 30 mit ihrer Innenkontur an der Außenkontur des Führungsbolzens 27 anliegt. Die Dichtfläche ist zylindrisch und am Umfang des Führungsbolzens 27 angeordnet. Dadurch, dass die Dichtung 64 eine in Umfangsrichtung und nicht stirnseitig wirkende Dichtung ist, kann bei unterschiedlichen Positionen des Kettenraddeckels 20, beispielsweise bei der Anordnung unterschiedlich dicker Führungsschienen 17 zwischen dem Getriebegehäuse 19 und dem Kettenraddeckel 20, eine zuverlässige Abdichtung erreicht werden. Über die Dichtung 64 wird auf einfache Weise eine Abdichtung des Kanalabschnitts 29 erreicht.

Wie Fig. 5 zeigt, ist die Dichtung 64 vollständig zwischen der zweiten Ebene 69 und einer dem Getriebegehäuse 19 abgewandten Außenseite 65 des Kettenraddeckels 20 angeordnet. Die Dichtung 64 befindet sich demnach vollständig innerhalb der Breite des Kettenraddeckels 20. Der erste Führungsbolzen 27 ist fest am Getriebegehäuse 19 gehalten, und die Hülse 30 ist fest am Kettenraddeckel 20 gehalten. Wird die Führungsschiene 17 gegenüber dem Getriebegehäuse 19 und dem Kettenraddeckel 20 verschoben, insbesondere zum Spannen der Sägekette 18, so bewegt sich die Dichtung 64 gegenüber dem Getriebegehäuse 19 und dem Kettenraddeckel 20 nicht. Auch eine Bewegung in der Dichtfläche, also eine Bewegung zwischen Hülse 30 und Führungsbolzen 27, findet nicht statt. Beim Abnehmen des Kettenraddeckels 20, insbesondere zum Auswechseln der Führungsschiene 17 und/oder der Sägekette 18, wird die Befestigungsmutter 21 gelöst und der Kettenraddeckel 20 in Richtung des Pfeils 90 vom Getriebegehäuse 19 abgenommen. Dabei wird die Aufnahme 30 vom ersten Führungsbolzen 27 abgezogen. Der Führungsbolzen 27 wird demnach aus der Aufnahme 30 gezogen.

Wie Fig. 6 zeigt, ist im Befestigungsstutzen 24 ein Antriebselement 71 angeordnet, das an seinem Innenumfang eine Antriebskontur 72 besitzt. Die Antriebskontur 72 ist im Ausführungsbeispiel ein Vierkantquerschnitt, über den das Antriebsmoment des Antriebsmotors 4 (Fig. 1) von einer nicht gezeigten Antriebswelle auf das Antriebselement 71 übertragen wird. Das Antriebselement 71 ist mit Lagern 73, im Ausführungsbeispiel Wälzlager, drehbar in einem im Getriebegehäuse 19 angeordneten Innengehäuse 66 gelagert. Das Innengehäuse 66 ist vorteilhaft gegenüber der Umgebung abgedichtet, und der Innenraum 67 des Innengehäuses 66 ist mit Fett oder Öl gefüllt. Zur Abdichtung sind die Lager 73 mit Dichtscheiben versehen. Am Antriebselement 71 ist ein Antriebskegelrad 75 eines Winkelgetriebes 74 fixiert. Das Antriebselement 71 mit dem Antriebskegelrad 75 ist um eine Drehachse 91 drehbar, die im Ausführungsbeispiel mit der Längsmittelachse des Führungsrohrs 5 (Fig. 1) zusammenfällt. Der Schneidkopf 14 besitzt ein Kettenrad 55, das die Sägekette 18 (Fig. 1) antreibt. Das Kettenrad 55 ist um eine Drehachse 56 drehbar, die quer, im Ausführungsbeispiel senkrecht, zur Drehachse 91 des Antriebselements 71 angeordnet ist. Das Kettenrad 55 ist an einer Abtriebswelle 77 fixiert, die mit Lagern 78 im Innengehäuse 66 gelagert ist. Auch die Lager 78 weisen Dichtscheiben auf. An der ins Innengehäuse 66 ragenden Seite trägt die Abtriebswelle 77 ein Abtriebskegelrad 76, das mit dem Antriebskegelrad 75 kämmt und mit diesem das Winkelgetriebe 74 bildet.

Im Innengehäuse 66 ist auch die Ölpumpe 79 angeordnet. Die Ölpumpe 79 wird über ein Antriebsschneckenrad 81 angetrieben, das eine Schneckenradverzahnung 88 trägt. Die Schneckenradverzahnung 88 kämmt mit einer Ölpumpenritzelverzahnung 89 eines Ölpumpenritzels 82. Das Antriebselement 71 besitzt eine durchgehende Öffnung, die die Antriebskontur 72 aufweist. Dadurch ist die Herstellung vereinfacht. Das Antriebsschneckenrad 81 besitzt einen Verbindungsstutzen 85, der einseitig in die Öffnung des Antriebselements 71 eingesteckt ist und den Innenraum 67 gegenüber dem Innenraum des Führungsrohrs 5 abdichtet. Wie Fig. 6 zeigt, ist das Antriebsschneckenrad 81 fliegend, d. h. nur an einer Seite, nämlich am Antriebselement 71, gelagert. Dadurch ergibt sich ein einfacher Aufbau.

Das Antriebsschneckenrad 81 besitzt im Ausführungsbeispiel eine Durchgangsöffnung 86, in die ein Stift 87, im Ausführungsbeispiel ein Metallstift, eingesteckt ist. Über den Stift 87 kann die Pressung zwischen Antriebselement 71 und Antriebsschneckenrad 81 erhöht werden.

Wie Fig. 6 auch zeigt, ragt in den Öltank 15 ein Ansaugschlauch 83, an dessen freiem Ende ein Saugkopf 84 festgelegt ist. Der Ansaugschlauch 83 führt Öl aus dem Öltank 15 zur Ölpumpe 79 zu. Der Ansaugschlauch 83 kann dabei als einteiliger Schlauch ausgebildet sein. Es kann jedoch vorteilhaft sein, mehrere Schlauchabschnitte vorzusehen, die miteinander verbunden sind, insbesondere an einer Wand des Öltanks 15. Die Ölpumpe 79 bildet die Ölzuführvorrichtung des Schneidkopfs 14. Von der Ölpumpe 79 führt der Ölzuführkanal 60 zur Führungsschiene 17. Ein Abschnitt des Ölzuführkanals 60 ist in dem auch in Fig. 6 gezeigten Zuführschlauch 32 geführt, der am Ölraum 31 mündet.

Über den Kanalabschnitt 29 wird das Öl aus dem Ölraum 31 auf die Seite des Kettenraddeckels 20, also auf die zweite, dem Kettenraddeckel 20 zugewandte Außenseite 59 einer Führungsschiene 17 (Fig. 7), geleitet.

Fig. 7 zeigt die Führungsschiene 17 am Getriebegehäuse 19. Die Führungsschiene 17 besitzt an der dem Getriebegehäuse 19 abgewandten Außenseite 59 eine Ölzuführöffnung 49, die sich bis zu der Führungsnut 57 erstreckt. Die Ölzuführöffnung 49 ragt demnach nicht über die gesamte Breite der Führungsschiene 17. Eine Zufuhr von Öl von der Seite des Getriebegehäuses 19 ist nicht möglich. Die Ölzuführöffnung 49 ist auf der Seite der Querebene 63 angeordnet, auf der sich die Sägekette 18 (Fig. 1) vom Getriebegehäuse 19 zum freien Ende der Führungsschiene 17 bewegt. Auf beiden Seiten der Querebene 63 besitzt die Führungsschiene 17 Spannöffnungen 51. Auf der Seite der Querebene 63, die gegenüberliegend zur Ölzuführöffnung 49 angeordnet ist, ragt in die Spannöffnung 51 ein Spannbolzen 48. Die Führungsschiene 17 besitzt an ihrem am Getriebegehäuse 19 angeordneten Ende einen Führungsschlitz 50, der sich in Richtung der Längsmittelachse 61 erstreckt und in dem ein Abschnitt der Längsmittelachse 61 liegt. Im Ausführungsbeispiel ist der Führungsschlitz 50 zu der dem Kettenrad 55 zugewandten Seite hin offen. Es kann jedoch auch vorgesehen sein, dass der Führungsschlitz 50 als an beiden Enden geschlossener Längsschlitz ausgebildet ist. Durch den Führungsschlitz 50 ragen der erste Führungsbolzen 27 und der zweite Führungsbolzen 28. Damit ragt auch der Kanalabschnitt 29 durch den Führungsschlitz 50. Der Führungsschlitz 50 erstreckt sich vollständig durch die Führungsschiene 50, also über die gesamte Dicke der Führungsschiene 17.

Es kann auch vorgesehen sein, den Kanalabschnitt 29 außerhalb des Führungsschlitzes 50 anzuordnen. Besonders bevorzugt ist der Kanalabschnitt 29 so angeordnet, dass die Längsmittelachse 61 der Führungsschiene 17 den Kanalabschnitt 29 schneidet. Auch eine Anordnung in einem anderen Bereich kann jedoch vorteilhaft sein. Es kann insbesondere vorteilhaft sein, den Kanalabschnitt 29 in einem Bereich anzuordnen, in dem der Kettenraddeckel 20 unmittelbar am Getriebegehäuse 19 anliegt. Dadurch liegt der Kanalabschnitt 29 im Betrieb geschützt. Dies kann beispielsweise ein Randbereich des Getriebegehäuses 19 nahe dessen Außenkontur sein.

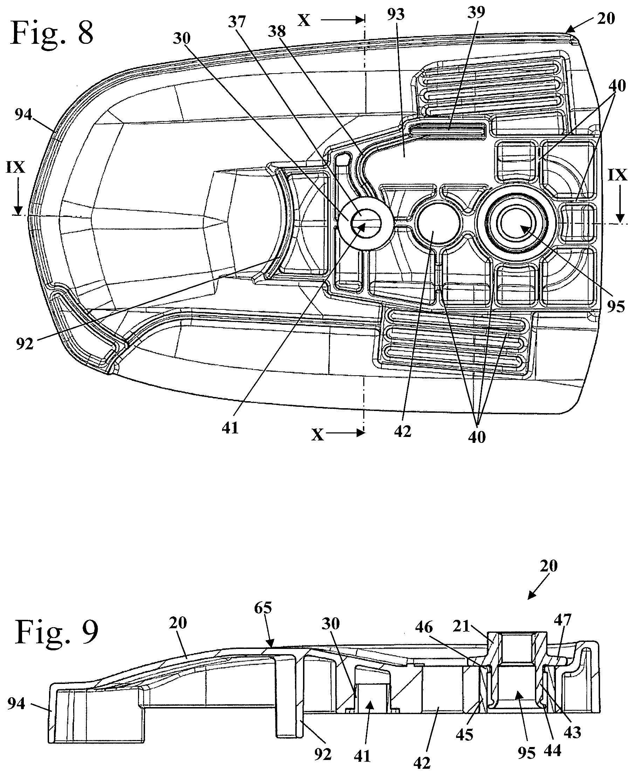

Die Fig. 8 bis 10 zeigen die Gestaltung des Kettenraddeckels 20 im Einzelnen. Fig. 8 zeigt den Kettenraddeckel 20 von der dem Getriebegehäuse 19 und der Führungsschiene 17 zugewandt liegenden Seite. Der Kettenraddeckel 20 besitzt eine Öffnung 95 für den zweiten Führungsbolzen 28. Die Hülse 30 begrenzt eine Öffnung 41 für den ersten Führungsbolzen 27. Zwischen den Öffnungen 41 und 95 ist eine Öffnung 42 angeordnet, durch die die Spannschraube 22 (Fig. 3) zugänglich ist. Die Öffnung 41 ist zur Außenseite 65 des Kettenraddeckels 20 (Fig. 9) geschlossen ausgebildet, wie auch Fig. 9 zeigt. Die Öffnungen 92 und 95 sind als Durchgangsöffnungen ausgebildet und erstrecken sich vollständig durch den Kettenraddeckel 20. Am Kettenraddeckel 20 ist ein Ölzuführschlitz 39 ausgebildet, der sich parallel zur Längsmittelachse 61 der Führungsschiene 17 (Fig. 7) erstreckt, und der gegenüberliegend zur Ölzuführöffnung 49 in der Führungsschiene 17 (Fig. 7) angeordnet ist. Der Ölzuführschlitz 39 bildet die Mündung des Ölzuführkanals 60 an der Führungsschiene 17, über die Öl vom Ölzuführkanal 60 in die Ölzuführöffnung 49 der Führungsschiene 17 eingeleitet wird. Über den Ölzuführschlitz 39 wird Öl zur Ölzuführöffnung 49 zugeführt. Der Ölzuführschlitz 39 ist über den Verbindungskanal 38 mit dem Ölraum 37 am Boden der Hülse 30 verbunden. Der Verbindungskanal 38 ist ebenfalls als zur Führungsschiene 17 hin offener Schlitz ausgebildet und wird von der Führungsschiene 17 abgedichtet und dadurch zu einem umfangsseitig vollständig geschlossenen Kanalabschnitt vervollständigt. An der Öffnung 41 wird der Ölraum 37 von der Hülse 30 bis auf eine Verbindungsöffnung, an der der Verbindungskanal 38 beginnt, verschlossen.

Es kann vorteilhaft sein, die Begrenzungskontur mindestens eines Querschnitts des Ölzuführkanals 60 abschnittsweise mehrteilig auszubilden. Ein besonders vorteilhafter Aufbau ergibt sich, wenn der im Kettenraddeckel 20 ausgebildete Abschnitt des Ölzuführkanals 60 mindestens teilweise einseitig von der zweiten Außenseite 59 der Führungsschiene 17 begrenzt wird. Im Ausführungsbeispiel sind der Ölzuführschlitz 39 und der Verbindungskanal 38 zu einer Anlagefläche 93 hin offen. An der Anlagefläche 93 liegt im Betrieb die Führungsschiene 17 mit ihrer zweiten Außenseite 59 (Fig. 7) an und dichtet den Ölzuführschlitz 39 und den Verbindungskanal 38 ab. Die Abdichtung relativ zueinander bewegter Flächen ist relativ aufwändig und störanfällig. Die Kontaktstelle zwischen dem Ölzuführschlitz 39 und der Ölzuführöffnung 49 ist bevorzugt die einzige Stelle des Ölzuführkanals 60, deren dichtende Flächen bei einer Bewegung der Führungsschiene 17 eine Relativbewegung zueinander ausführen. Der Kanalabschnitt 29 ist dagegen getrennt von der Führungsschiene 17 ausgebildet und wird nicht mit der Führungsschiene 17 bewegt, so dass eine Abdichtung des Kanalabschnitts 29 konstruktiv einfach ausgeführt sein kann und eine zuverlässige Abdichtung erreicht werden kann.

Im Ausführungsbeispiel erstreckt sich die Anlagefläche 93 lediglich zwischen dem Ölzuführschlitz und den Öffnungen 41, 42 und 95. Der Kettenraddeckel 20 besitzt an der zur Führungsschiene 17 hin ragenden Seite eine Vielzahl von Anlagerippen 40, deren Stirnseiten ebenfalls an der Führungsschiene 17 anliegen. Dadurch wird ein gleichmäßiger Druck des Kettenraddeckels 20 auf die Führungsschiene 17 erreicht, so dass sich eine gute Fixierung ergibt. An der der Öffnung 95 abgewandten Seite der Öffnung 41 ist eine Rippe 92 vorgesehen, die auch in Fig. 9 gezeigt ist. Die Rippe 92 ragt bis nahe an das Getriebegehäuse 19. Wie Fig. 6 zeigt, erstreckt sich die Rippe 92 im Bereich zwischen dem Kettenrad 55 und den Führungsbolzen 27 und 28. Die Rippe 92 ist dabei gebogen ausgebildet und erstreckt sich benachbart zu einem Abschnitt des Umfangs des Kettenrads 55.

Wie Fig. 9 zeigt, ist die Befestigungsmutter 21 in der Öffnung 95 verliersicher gehalten. Hierzu ist eine Hülse 45 im Kettenraddeckel 20 vorgesehen, die an der dem Getriebegehäuse 28 abgewandten Seite einen nach innen ragenden Halterand 46 besitzt. Die Befestigungsmutter 21 besitzt einen in den Kettenraddeckel 20 ragenden hülsenförmigen Hülsenabschnitt 43, an dessen dem Getriebegehäuse 19 zugewandten Ende ein Halterand 44 vorgesehen ist, an dem der Hülsenabschnitt 43 nach außen gebogen ist. Der Halterand 44 des Hülsenabschnitts 43 hintergreift den Halterand 46 der Hülse 45 und verhindert so, dass die Befestigungsmutter 21 vom Kettenraddeckel 20 abgenommen werden kann. Wie Fig. 9 auch zeigt, besitzt die Befestigungsmutter 21 einen Bund 47, der an der Außenseite 65 des Kettenraddeckels 20 aufliegt.

Wie die Fig. 8 bis 10 zeigen, besitzt der Kettenraddeckel 20 benachbart zum Kettenrad 55 einen Umfangsrand 94, der bis zum Getriebegehäuse 19 ragt. Dies ist auch in Fig. 6 gezeigt. Der Umfangsrand 94 schließt den zwischen Getriebegehäuse 19 und Kettenraddeckel 20 gebildeten Spalt 70 (Fig. 4) über einen Teil des Umfangs des Schneidkopfes 14.

Fig. 11 zeigt die Führungsschiene 17 zwischen dem Getriebegehäuse 19 und dem Kettenraddeckel 20. Wie Fig. 11 zeigt, besitzt die Führungsschiene 17 an ihrer dem Kettenraddeckel 20 zugewandten, dem Getriebegehäuse 19 abgewandten zweiten Außenseite 59 die Ölzuführöffnung 49, die sich von der Außenseite 59 bis in die Führungsnut 57 erstreckt. Die Ebenen 68 und 69 besitzen einen Abstand c, der der Dicke der Führungsschiene 17 entspricht.

Wie Fig. 12 zeigt, besitzt der zweite Führungsbolzen 28 ein Außengewinde 62, auf das die Befestigungsmutter 21 (Fig. 10) aufgeschraubt werden kann. Wie die Fig. 12 und 13 zeigen, ist am Getriebegehäuse 19 eine Auflagefläche 54 für die Führungsschiene 17 ausgebildet. Auch die Auflagefläche 54 ist vergleichsweise klein ausgebildet. In Fig. 13 ist die Querebene 63 der Führungsschiene 17 schematisch eingezeichnet. Die Querebene 63 erstreckt sich durch die Längsmittelachsen der Führungsbolzen 27 und 28. Auf einer Seite der Querebene 63 ist eine Spannvorrichtung 52 angeordnet. Die Spannvorrichtung 52 besitzt ein Spannstück 53, das durch Drehen der Spannschraube 22 in Richtung der in Fig. 11 gezeigten Längsmittelachse 61 der Führungsschiene 17 verschiebbar ist. Die Ölzuführöffnung 49 (Fig. 11) und die Spannvorrichtung 52 sind im Wesentlichen auf gegenüberliegenden Seiten der Querebene 63 angeordnet. Die am Getriebegehäuse 17 ausgebildete Auflagefläche 54 ist benachbart zur Ölzuführöffnung 49, also ebenfalls auf der der Spannvorrichtung 52 gegenüberliegenden Seite der Querebene 63 angeordnet. Benachbart zur Auflagefläche 54 besitzt die Führungsschiene 17 die in Fig. 11 gezeigte Ölzuführöffnung 49. Eine weitere Ölzuführöffnung ist üblicherweise benachbart zur Spannvorrichtung 52 angeordnet, so dass die Führungsschiene 17 in zwei um ihre Längsmittelachse 61 gedrehten Positionen am Getriebegehäuse 19 festgelegt werden kann. Die benachbart zur Spannvorrichtung 52 angeordnete weitere Ölzuführöffnung ist in Laufrichtung der Sägekette 18 (Fig. 1) vorlaufend zum Kettenrad 55 (Fig. 12) angeordnet, so dass eine Ölzuführung benachbart zur Spannvorrichtung 52 nicht zweckmäßig ist. Über die weitere Ölzuführöffnung wird im Betrieb kein Öl zugeführt.

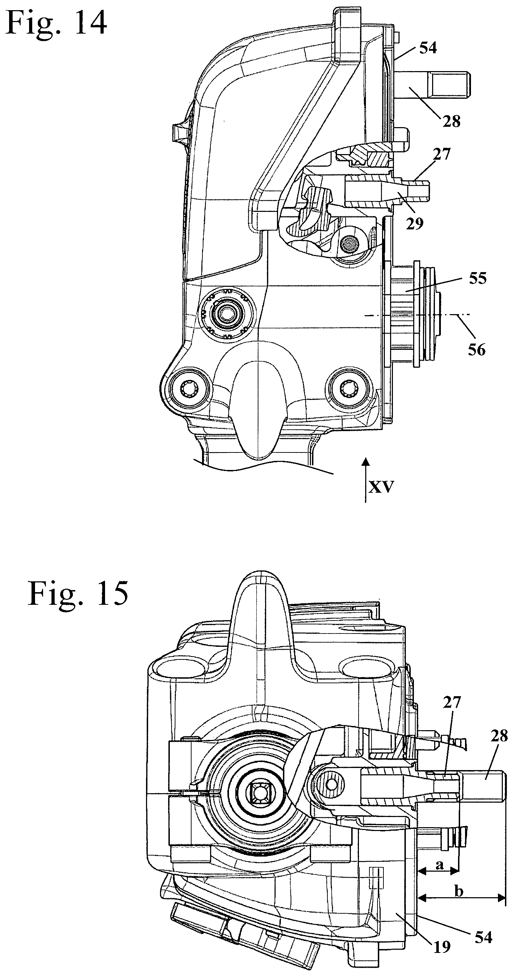

Fig. 14 zeigt die Anordnung der Auflagefläche 54 und der Führungsbolzen 27 und 28.

Wie Fig. 15 zeigt, ist der erste Führungsbolzen 27 deutlich kürzer als der zweite Führungsbolzen 28. Der erste Führungsbolzen 27 besitzt eine aus dem Getriebegehäuse 19 auskragende freie Länge a. Der zweite Führungsbolzen 28 besitzt eine aus dem Getriebegehäuse 19 auskragende freie Länge b, die deutlich größer als die freie Länge a ist. Die freie Länge b kann etwa das 1,5fache bis 3fache der freien Länge a betragen. Die freien Längen a und b sind im Ausführungsbeispiel zur Auflagefläche 54 gemessen. Im Ausführungsbeispiel bildet der Führungsbolzen 27 einen Fortsatz. Die freie Länge a des Fortsatzes ist vorteilhaft größer als der in Fig. 11 gezeigte Abstand c zwischen den Ebenen 68 und 69. Der Abstand c entspricht vorteilhaft der Dicke der Führungsschiene 17. Vorteilhaft ist die freie Länge a mindestens um die in Richtung der Längsachse 80 gemessene Länge der Dichtung 64, also der Dichtfläche, (Fig. 6) größer als der Abstand c (Fig. 11). Die freie Länge b des zweiten Führungsbolzens 28 ist vorteilhaft so bemessen, dass der zweite Führungsbolzen 28 vollständig durch den Kettenraddeckel 20 auf die Außenseite 65 des Kettenraddeckels 20 (Fig. 9) ragt, so dass die Befestigungsmutter 21 gut auf dem Befestigungsbolzen 28 fixiert werden kann.

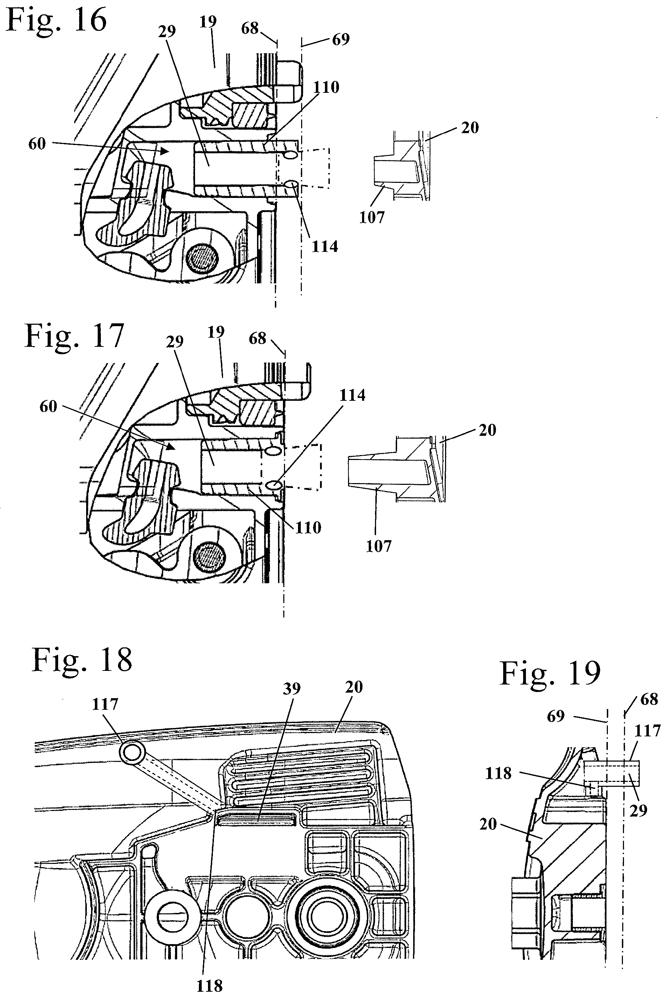

In Fig. 16 ist ein Ausführungsbeispiel von Getriebegehäuse 19 und Kettenraddeckel 20 gezeigt, das im Wesentlichen dem in den vorangegangenen Figuren gezeigten Ausführungsbeispiel entspricht. Gleiche Bezugszeichen bezeichnen in allen Figuren einander entsprechende Elemente. Beim Ausführungsbeispiel nach Fig. 16 ist am Getriebegehäuse 19 eine Hülse 110 festgelegt. Am Kettenraddeckel 20, der in der schematischen Darstellung in Fig. 16 in einem Abstand zum Getriebegehäuse gezeichnet ist, ist ein Fortsatz 107 angeordnet. Im Ausführungsbeispiel ist der Fortsatz 107 einteilig mit dem Kettenraddeckel 20 ausgebildet. Der Fortsatz 107 ist vorteilhaft in einem Spritzgussverfahren an den Kettenraddeckel 20 angeformt. Die Hülse 110 dient zur Aufnahme des Fortsatzes 107, wie in Fig. 16 mit strichpunktierter Linie dargestellt ist. Durch die Hülse 110 und den Fortsatz 107 erstreckt sich der Kanalabschnitt 29 des Ölzuführkanals 60. Zwischen der Hülse 110 und dem Fortsatz 107 ist eine in Fig. 16 schematisch eingezeichnete Dichtung 114 angeordnet, die als separates Dichtelement ausgebildet ist. Die Dichtung 114 kann jedoch auch durch eine Dichtfläche gebildet sein, an der der Fortsatz 107 und die Hülse 114 aneinander anliegen. Wie Fig. 16 zeigt, ist die Dichtung 114 zwischen den Ebenen 68 und 69 angeordnet. Bei montierter Führungsschiene 17 liegt die Dichtung 114 damit zwischen den Außenseiten 58 und 59 der Führungsschiene 17 (Fig. 11). Die Dichtung 114 liegt am Außenumfang des Fortsatzes 107 und am Innenumfang der Hülse 110 an.

Bei dem in Fig. 17 gezeigten weiteren Ausführungsbeispiel ragt ein am Kettenraddeckel 20 ausgebildeter Fortsatz 107 bis über die Ebene 68 in das Getriebegehäuse 19. Die Dichtung 114 ist im Getriebegehäuse 19, also auf der der Ebene 69 abgewandten Seite der Ebene 68 angeordnet. In einer weiteren alternativen Ausgestaltung kann auch vorgesehen sein, dass die Hülse 110 sich bis auf die dem Getriebegehäuse 19 abgewandte Seite der Ebene 69 erstreckt. Insbesondere ist die Dichtung 114 auf der dem Getriebegehäuse 19 abgewandten Seite der Ebene 69 angeordnet.

Die Figuren 18 bis 21 zeigen eine weitere alternative Ausgestaltung. An dem in den Figuren 18 und 19 gezeigten Kettenraddeckel 20 ist ein Fortsatz 117 angeordnet. Die Position des Fortsatzes 117 ist in Fig. 19 lediglich schematisch eingezeichnet. Der Fortsatz 117 ist in einem Randbereich des Getriebegehäuses 19 außerhalb des Bereichs, in dem die Führungsschiene 17 (Fig. 7) am Getriebegehäuse 19 anliegt, angeordnet. Der Fortsatz 117 kann als separates Bauteil ausgebildet oder am Kettenraddeckel 20 angeformt sein und ist über einen Kanal 118 mit dem Ölzuführschlitz 39 verbunden. Der Fortsatz 117 erstreckt sich dabei bis auf die dem Kettenraddeckel 20 abgewandte Seite der Ebene 68.

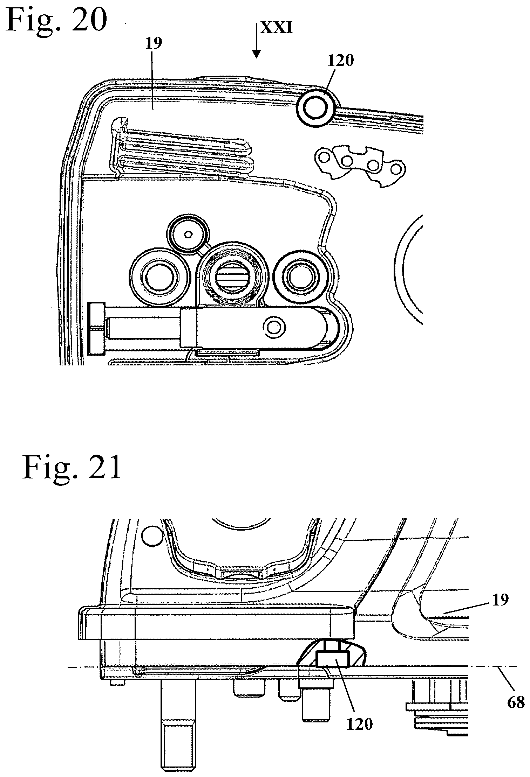

Wie die Figuren 20 und 21 zeigen, ist im Getriebegehäuse 19 in dem dem Fortsatz 117 gegenüberliegenden Bereich eine Aufnahme 120 angeordnet, die als Vertiefung im Getriebegehäuse 19 ausgebildet ist und in die der Fortsatz 117 ragt, wenn der Kettenraddeckel 20 am Getriebegehäuse 19 festgelegt ist. Die Lage des Fortsatzes 117 und der Aufnahme 120 ist in den Figuren 18 bis 21 lediglich schematisch eingezeichnet. Der Fortsatz 117 und die Aufnahme 120 sind vorteilhaft in einem Bereich angeordnet, der außerhalb der Führungsschiene 17 liegt und keinen Kontakt zur Sägekette 18 (Fig. 1) besitzt. Die Dichtung zwischen Fortsatz 117 und Kettenraddeckel 20 ist vorteilhaft auf der dem Getriebegehäuse 19 zugewandten Seite der Ebene 58 angeordnet und kann wie in einem der vorstehend beschriebenen Ausführungsbeispiele ausgebildet sein. Es kann jedoch auch vorteilhaft sein, dass die Dichtung zwischen den Ebenen 68 und 69 oder auf der der Ebene 68 abgewandten Seite der Ebene 69 angeordnet ist. Anstatt der Vertiefung im Getriebegehäuse 19 ist dann vorteilhaft ein Fortsatz entsprechender Länge am Getriebegehäuse 19 vorgesehen, der in eine entsprechende Aufnahme am Kettenraddeckel 20 ragt. Die Länge des Fortsatzes ist vorteilhaft geeignet angepasst.

Die gezeigten Ausführungsbeispiele können in beliebiger Weise miteinander kombiniert werden, um vorteilhafte Gestaltungen zu erhalten. Nicht näher beschriebene Gestaltungen der Ausführungsbeispiele nach den Figuren 16 bis 21 sind vorteilhaft wie im Ausführungsbeispiel nach den Figuren 1 bis 15 ausgebildet.

## Patentansprüche

1. Handgeführtes Arbeitsgerät mit einer Führungsschiene (17), wobei die Führungsschiene (17) zwischen einem Gehäuse und einem Kettenraddeckel (20) des Arbeitsgeräts gehalten ist, wobei die Führungsschiene (17) eine Führungsnut (57) für eine Sägekette (18) aufweist, wobei die Führungsschiene (17) einen Führungsschlitz (50) besitzt, der sich in Richtung einer Längsmittelachse (61) der Führungsschiene (17) erstreckt, und an dem die Führungsschiene (17) an mindestens einem Führungselement längsverschiebbar gegenüber dem Gehäuse geführt ist, wobei die Führungsschiene (17) eine erste, dem Gehäuse zugewandte Außenseite (58) und eine zweite, dem Kettenraddeckel (20) zugewandte Außenseite (59) besitzt, wobei die erste Außenseite (58) in einer ersten Ebene (68) liegt und wobei die zweite Außenseite (59) in einer zweiten Ebene (69) liegt, wobei das Arbeitsgerät eine Ölzuführvorrichtung besitzt,
wobei die Führungsschiene (17) eine Ölzuführöffnung (49) aufweist, die sich von der zweiten Außenseite (59) der Führungsschiene (17) bis in die Führungsnut (57) erstreckt, wobei die Ölzuführöffnung (49) über einen Ölzuführkanal (60) mit der Ölzuführvorrichtung fluidisch verbunden ist, und wobei der Ölzuführkanal (60) einen Kanalabschnitt (29) umfasst, der sich zumindest von der ersten Ebene (68) bis zu der zweiten Ebene (69) erstreckt, **dadurch gekennzeichnet, dass** der Kanalabschnitt (29) von der Führungsschiene (17) getrennt ausgebildet ist, wobei der Kanalabschnitt (29) ortsfest gegenüber dem Gehäuse angeordnet ist.

2. Arbeitsgerät nach Anspruch 1,
**dadurch gekennzeichnet, dass** die Längsmittelachse (61) der Führungsschiene (17) den Kanalabschnitt (29) schneidet.

3. Arbeitsgerät nach Anspruch 1 oder 2,
**dadurch gekennzeichnet, dass** sich der Kanalabschnitt (29) durch den Führungsschlitz (50) erstreckt.

4. Arbeitsgerät nach einem der Ansprüche 1 bis 3,
**dadurch gekennzeichnet, dass** der Kanalabschnitt (29) mindestens teilweise in einem Fortsatz (107, 117) ausgebildet ist, der in eine Aufnahme (120) ragt, wobei der Ölzuführkanal (60) durch die Aufnahme (120) verläuft, wobei der Fortsatz (107, 117) beim Abnehmen des Kettenraddeckels (20) von dem Gehäuse aus der Aufnahme (120) gezogen wird und wobei der Fortsatz (107, 117) und die Aufnahme (120) an einer Dichtung (64, 114) zueinander abgedichtet sind.

5. Arbeitsgerät nach Anspruch 4,
**dadurch gekennzeichnet, dass** die Dichtung (64, 114) am Umfang des Fortsatzes (107, 117) angeordnet ist.

6. Arbeitsgerät nach Anspruch 4 oder 5,
**dadurch gekennzeichnet, dass** die Dichtung (64, 114) relativ zum Gehäuse beim Verschieben der Führungsschiene (17) gegenüber dem Gehäuse ortsfest angeordnet ist.

7. Arbeitsgerät nach einem der Ansprüche 4 bis 6,
**dadurch gekennzeichnet, dass** die Dichtung (64, 114) zwischen der zweiten Ebene (69) und einer dem Gehäuse abgewandten Außenseite (65) des Kettenraddeckels (20) angeordnet ist.

8. Arbeitsgerät nach einem der Ansprüche 4 bis 7,
**dadurch gekennzeichnet, dass** die Aufnahme eine Hülse (30, 110) ist.

9. Arbeitsgerät nach einem der Ansprüche 4 bis 8,
**dadurch gekennzeichnet, dass** der Fortsatz (107, 117) durch ein Führungselement gebildet ist und dass der Kanalabschnitt (29) als Durchgangsöffnung in dem Führungselement ausgebildet ist.

10. Arbeitsgerät nach einem der Ansprüche 1 bis 9,
**dadurch gekennzeichnet, dass** im Kettenraddeckel (20) ein Ölzuführschlitz (39) ausgebildet ist, der gegenüberliegend zur Ölzuführöffnung (49) der Führungsschiene (17) angeordnet ist.

11. Arbeitsgerät nach Anspruch 10,
**dadurch gekennzeichnet, dass** der Kanalabschnitt (29) mit dem Ölzuführschlitz (39) über einen zur Schienenanlagefläche des Kettenraddeckels (20) offenen Verbindungskanal (38) verbunden ist.

12. Arbeitsgerät nach Anspruch 10 oder 11,
**dadurch gekennzeichnet, dass** das Arbeitsgerät eine Spannvorrichtung (52) besitzt, dass die Führungsschiene (17) eine Querebene (63) besitzt, die die Längsmittelachse (61) der Führungsschiene (17) enthält und die senkrecht zur Ebene der Führungsschiene (17) steht, und dass der Ölzuführschlitz (39) und die Spannvorrichtung (52) auf gegenüberliegenden Seiten der Querebene (63) angeordnet sind.

13. Arbeitsgerät nach einem der Ansprüche 1 bis 12,
**dadurch gekennzeichnet, dass** ein zweites Führungselement vorgesehen ist, das als Führungsbolzen (28) ausgebildet ist und ein Außengewinde (62) zum Aufschrauben einer Befestigungsmutter (21) zur Fixierung des Kettenraddeckels (20) besitzt.

14. Arbeitsgerät nach einem der Ansprüche 1 bis 13,
**dadurch gekennzeichnet, dass** das Arbeitsgerät ein Hochentaster (1) und das Gehäuse ein Getriebegehäuse (19) ist.

## Claims

1. Hand-held implement having a guide bar (17), wherein the guide bar (17) is held between a housing and a sprocket cover (20) of the implement, wherein the guide bar (17) has a guide groove (57) for a saw chain (18), wherein the guide bar (17) has a guide slot (50), which extends in the direction of a longitudinal centre axis (61) of the guide bar (17) and on which the guide bar (17) is guided in a longitudinally displaceable manner in relation to the housing by way of at least one guide element, wherein the guide bar (17) has a first outer side (58), which is directed towards the housing, and a second outer side (59), which is directed towards the sprocket cover (20), wherein the first outer side (58) is located in a first plane (68) and wherein the second outer side (59) is located in a second plane (69), wherein the implement has an oil-supply device,
wherein the guide bar (17) has an oil-supply opening (49), which extends from the second outer side (59) of the guide bar (17) into the guide groove (57), wherein the oil-supply opening (49) is fluidically connected to the oil-supply device via an oil-supply channel (60), and wherein the oil-supply channel (60) comprises a channel portion (29) which extends at least from the first plane (68) as far as the second plane (69), **characterized in that** the channel portion (29) is formed separately from the guide bar (17), wherein the channel portion (29) is arranged in a fixed position in relation to the housing.

2. Implement according to Claim 1,
**characterized in that** the longitudinal centre axis (61) of the guide bar (17) intersects the channel portion (29).

3. Implement according to Claim 1 or 2,
**characterized in that** the channel portion (29) extends through the guide slot (50).

4. Implement according to one of Claims 1 to 3,
**characterized in that** the channel portion (29) is formed at least in part in an extension (107, 117), which projects into a mount (120), wherein the oil-supply channel (60) runs through the mount (120), wherein, when the sprocket cover (20) is being removed from the housing, the extension (107, 117) is pulled out of the mount (120), and wherein the extension (107, 117) and the mount (120) are sealed in relation to one another by way of a seal (64, 114).

5. Implement according to Claim 4,
**characterized in that** the seal (64, 114) is arranged on the circumference of the extension (107, 117).

6. Implement according to Claim 4 or 5,
**characterized in that** the seal (64, 114) is arranged in a fixed position relative to the housing when the guide bar (17) is being displaced in relation to the housing.

7. Implement according to one of Claims 4 to 6,
**characterized in that** the seal (64, 114) is arranged between the second plane (69) and an outer side (65) of the sprocket cover (20), this outer side being directed away from the housing.

8. Implement according to one of Claims 4 to 7,
**characterized in that** the mount is a sleeve (30, 110).

9. Implement according to one of Claims 4 to 8,
**characterized in that** the extension (107, 117) is formed by a guide element, and **in that** the channel portion (29) is in the form of a through-opening in the guide element.

10. Implement according to one of Claims 1 to 9,
**characterized in that** an oil-supply slot (39) is formed in the sprocket cover (20), and is arranged opposite to the oil-supply opening (49) of the guide bar (17).

11. Implement according to Claim 10,
**characterized in that** the channel portion (29) is connected to the oil-supply slot (39) via a connecting channel (38), which is open towards the bar-abutment surface of the sprocket cover (20).

12. Implement according to Claim 10 or 11,
**characterized in that** the implement has a tensioning device (52), **in that** the guide bar (17) has a transverse plane (63), which contains the longitudinal centre axis (61) of the guide bar (17) and is perpendicular to the plane of the guide bar (17), and **in that** the oil-supply slot (39) and the tensioning device (52) are arranged on opposite sides of the transverse plane (63).

13. Implement according to one of Claims 1 to 12,
**characterized in that** a second guide element is provided, which is in the form of a guide bolt (28) and has an external thread (62) on which to screw a fastening nut (21) for the purpose of fixing the sprocket cover (20).

14. Implement according to one of Claims 1 to 13,
**characterized in that** the implement is a pole pruner (1) and the housing is a gearmechanism housing (19).

## Revendications

1. Outil à main comprenant un rail de guidage (17), le rail de guidage (17) étant maintenu entre un boîtier et un carter (20) de roue à chaîne de l'outil, le rail de guidage (17) présentant une rainure de guidage (57) pour une chaîne de scie (18), le rail de guidage (17) présentant une fente de guidage (50) qui s'étend dans la direction de l'axe médian longitudinal (61) du rail de guidage (17) et sur lequel le rail de guidage (17) est guidé de manière à pouvoir se déplacer longitudinalement par rapport au boîtier sur au moins un élément de guidage, le rail de guidage (17) ayant un premier côté extérieur (58) tourné vers le boîtier et un deuxième côté extérieur (59) tourné vers le carter (20) de roue à chaîne, le premier côté extérieur (58) se trouvant dans un premier plan (68) et le deuxième côté extérieur (59) se trouvant dans un deuxième plan (69), l'outil de travail étant équipé d'un dispositif d'alimentation en huile,
le rail de guidage (17) présentant une ouverture (49) d'alimentation en huile qui s'étend depuis le deuxième côté extérieur (59) du rail de guidage (17) jusque dans la rainure de guidage (57), l'ouverture (49) d'alimentation en huile étant reliée fluidiquement au dispositif d'alimentation en huile par un canal (60) d'alimentation en huile, et le canal (60) d'alimentation en huile comprenant une partie de canal (29) qui s'étend au moins du premier plan (68) jusqu'au deuxième plan (69), **caractérisé en ce que** la partie de canal (29) est séparée du rail de guidage (17), la partie de canal (29) étant agencée de manière fixe par rapport au boîtier.

2. Outil selon la revendication 1,
**caractérisé en ce que** l'axe médian longitudinal (61) du rail de guidage (17) est en intersection avec la partie de canal (29).

3. Outil selon la revendication 1 ou la revendication 2,
**caractérisé en ce que** la partie de canal (29) s'étend à travers la fente de guidage (50).

4. Outil selon l'une des revendications 1 à 3,
**caractérisé en ce que** la partie de canal (29) est formée au moins en partie dans un appendice saillant (107, 117) qui s'étend dans un logement (120), le canal (60) d'alimentation en huile traversant le logement (120), l'appendice saillant (107, 117) étant, lorsque le carter (20) de roue à chaîne est enlevé du boîtier, retiré du logement (120), et l'appendice saillant (107, 117) et le logement (120) étant rendus étanches l'un par rapport à l'autre par un joint d'étanchéité (64, 114).

5. Outil selon la revendication 4,
**caractérisé en ce que** le joint (64, 114) est agencé sur le pourtour de l'appendice saillant (107, 117).

6. Outil selon la revendication 4 ou la revendication 5,
**caractérisé en ce que** le joint (64, 114) est agencé de manière fixe par rapport au boîtier lorsque le rail de guidage (17) est déplacé par rapport au boîtier.

7. Outil selon l'une des revendications 4 à 6,
**caractérisé en ce que** le joint (64, 114) est agencé entre le deuxième plan (69) et un côté extérieur (65) du carter (20) de roue à chaîne, opposée au boîtier.

8. Outil selon l'une des revendications 4 à 7,
**caractérisé en ce que** le réceptacle est une douille (30, 110).

9. Outil selon l'une des revendications 4 à 8,
**caractérisé en ce que** l'appendice saillant (107, 117) est formé par un élément de guidage et **en ce que** la partie de canal (29) est réalisée sous la forme d'une ouverture de passage dans l'élément de guidage.

10. Outil selon l'une des revendications 1 à 9,
**caractérisé en ce qu'**une fente (39) d'alimentation en huile est formée dans le carter (20) de roue à chaîne, cette fente étant aménagée en face de l'ouverture (49) d'alimentation en huile du rail de guidage (17).

11. Outil selon la revendication 10,
**caractérisé en ce que** la partie de canal (29) est reliée à la fente (39) d'alimentation en huile par un canal de liaison (38) ouvert vers la surface d'appui du carter (20) de roue à chaîne.

12. Outil selon la revendication 10 ou la revendication 11,
**caractérisé en ce que** l'outil comprend un dispositif de serrage (52), **en ce que** le rail de guidage (17) comprend un plan transversal (63) qui contient l'axe longitudinal médian (61) du rail de guidage (17) et qui est perpendiculaire au plan du rail de guidage (17), et **en ce que** la fente (39) d'alimentation en huile et le dispositif de serrage (52) sont agencés sur des côtés opposés du plan transversal (63).

13. Outil selon l'une des revendications 1 à 12,
**caractérisé en ce qu'**un deuxième élément de guidage est prévu, lequel est conçu sous la forme d'un boulon de guidage (28) et présente un filetage extérieur (62) pour visser un écrou de fixation (21) afin de fixer le carter (20) de roue à chaîne.

14. Outil selon l'une des revendications 1 à 13,
**caractérisé en ce que** l'outil est une scie élagueuse (1) et le boîtier est un boîtier de transmission (19).
